# EUROPÄISCHE PATENTSCHRIFT

(11) **EP 3 630 866 B1**
(45) Veröffentlichungstag und Bekanntmachung des Hinweises auf die Patenterteilung: **08.12.2021**
(21) Anmeldenummer: 18725882.7
(22) Anmeldetag: 29.05.2018
(51) Int. Cl.: C08G 59/50, C08G 59/62, C08G 59/40, C08G 59/56, C09J 163/00

(54) **HITZEHÄRTENDE EPOXIDHARZKLEBSTOFFE**
THERMOSETTING EPOXY ADHESIVES
MATIÈRE ADHÉSIVE ÉPOXY THERMODURCISSABLE

(30) Priorität: 29.05.2017 EP 17173288
(43) Veröffentlichungstag der Anmeldung: 08.04.2020
(73) Patentinhaber: Sika Technology AG, 6340 Baar (CH)
(72) Erfinder: VOCI, Antonio, 8050 Z rich (CH); GUTGSELL, Michael, 8610 Uster (CH); EYHOLZER, Christian, 8105 Watt (CH)
(74) Vertreter: Sika Patent Attorneys
(86) Internationale Anmeldenummer: PCT/EP2018/064090
(87) Internationale Veröffentlichungsnummer: WO 2018/219961

(56) Entgegenhaltungen:
- EP-A1- 1 475 412
- CH-A2- 699 848
- CN-A- 102 286 138

## Beschreibung

### Technisches Gebiet

Die vorliegende Erfindung betrifft das Gebiet der hitzehärtenden Epoxidharz-Rohbauklebstoffe, insbesondere das Gebiet der Bördelfalzverklebungen.

### Stand der Technik

Hitzehärtenden Epoxidharzklebstoffe werden schon seit langem als Klebstoffe für den Rohbau von Transportmitteln eingesetzt sowie für Bördelfalzverklebungen in der industriellen Fertigung verwendet. Es ist bekannt, Transportmittelteile wie Türen, Kofferraumhauben, Rückwandklappen Motorraumhauben und dergleichen aus einem Aussenblech und einem Innenblech mittels Falzverbindung herzustellen. Um eine Fixierung des Falzes zu gewährleisten wird hierbei ein Klebstoff verwendet, welcher das Innenblech mit dem Aussenblech verbindet. Bis zur finalen Aushärtung des Klebstoffs wird das Bauteil mit dem Bördelfalz typischerweise weiterbewegt und die Klebstelle dadurch mechanisch beansprucht. Um eine korrekte und funktionelle Positionierung der Bördelfalzverklebungen zu gewährleisten wäre es vorteilhaft, durch eine kurzfristige Wärmebehandlung, insbesondere eine induktive Aufheizung, den Klebstoff teilweise auszuhärten, respektive vorzuhärten, um eine ausreichende Festigkeit und Haftung für den Weitertransport des Bauteils bis zur finalen Aushärtung des Klebstoffs zu gewährleisten. Die finale Aushärtung des Klebstoffs findet typischerweise bei einer Temperatur von 140 - 220°C statt.

Die EP2113525A1 offenbart Aktivatoren für hitzehärtende Epoxidharzzusammensetzungen, welche sich durch eine gute Aktivierungswirkung sowie eine gute Lagerstabilität auszeichnen.

Die CN 102286138 A offenbart eine hochtemperaturbeständige Epoxidharzzusammensetzung für schnelle Pultrusion-Verfahren. Diese Epoxidharzzusammensetzung enthält eine Epoxidharzkomponente, mindestens ein Amin als Härter sowie einen "latenten Härter".

### Darstellung der Erfindung

Aufgabe der vorliegenden Erfindung ist es daher, hitzehärtende Epoxidharzzusammensetzungen zur Verfügung zu stellen, welche nach kurzzeitiger Erhitzung von 30 bis 120 Sekunden auf eine Temperatur von 90°C bis 130°C eine ausreichende Festigkeit und Haftung aufweisen, um transportbedingten mechanischen Belastungen zu widerstehen. Weiter soll die Festigkeit und Haftung der vollständig ausgehärteten Epoxidharzzusammensetzungen den Anforderungen eines strukturellen Klebstoffs genügen.

Überraschenderweise wurde gefunden, dass eine hitzehärtende Epoxidharzzusammensetzung gemäss Anspruch 1 diese Aufgabe zu lösen vermag.

Weitere Aspekte sind Gegenstand weiterer unabhängiger Ansprüche. Bevorzugte Ausführungsformen der Erfindung sind Gegenstand der Unteransprüche.

### Wege zur Ausführung der Erfindung

Die vorliegende Erfindung betrifft in einem ersten Aspekt eine hitzehärtende Epoxidharzzusammensetzung umfassend:
- eine erste Komponente **K1** enthaltend:
   - mindestens ein Epoxidharz **A** mit durchschnittlich mehr als einer Epoxidgruppe pro Molekül;
- eine zweite Komponente **K2** enthaltend:
   - mindestens ein tertiäres Amin **tAM** der Formel 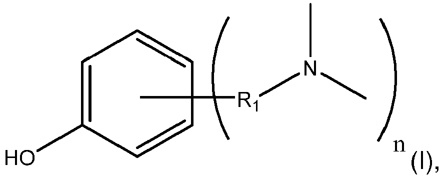 wobei R₁ für eine Alkylengruppe mit 1 - 20 C-Atomen, welche gegebenenfalls substituiert ist und gegebenenfalls Heteroatome aufweist, steht und n für einen Wert von 1 - 3 steht;
   - mindestens ein primäres Amin **pAM** ausgewählt aus der Liste bestehend aus 1,3-Xylylendiamin (MXDA), 1,4-Xylylendiamin (PXDA), 1,3,5-Tris-(aminomethyl)benzol, insbesondere 1,3-Xylylendiamin (MXDA),
      wobei die hitzehärtende Epoxidharzzusammensetzung weiter mindestens einen Härter **B** für Epoxidharze enthält, welcher durch erhöhte Temperatur aktiviert wird,
      und wobei das Verhältnis des Anteils tertiäres Amin **tAM** in Gramm pro mol Epoxidgruppen des Epoxidharz **A** von 2.4 ― 19.6 g/mol Epoxidgruppen beträgt, und wobei das Verhältnis des Anteils primäres Amin **pAM** in Gramm pro mol Epoxidgruppen des Epoxidharz **A** von 6 ― 31 g/mol Epoxidgruppen beträgt.

Die hitzehärtende Epoxidharzzusammensetzung umfasst eine erste Komponente **K1** enthaltend mindestens ein Epoxidharz **A** mit durchschnittlich mehr als einer Epoxidgruppe pro Molekül. Die Epoxidgruppe liegt vorzugsweise als Glycidylethergruppe vor. Das Epoxidharz **A** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Partikel zerkleinern.

Bevorzugte Epoxid-Festharze weisen die Formel (A-I) auf

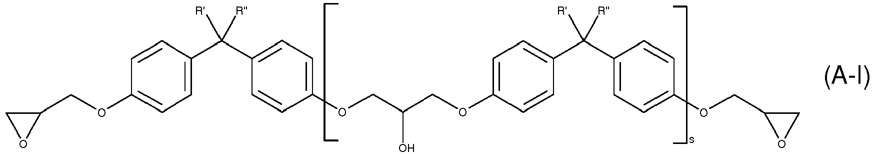

Hierbei stehen die Substituenten R' und R" unabhängig voneinander entweder für H oder CH₃. Der Term "unabhängig voneinander" in der Definition von Gruppen und Resten bedeutet in diesem Dokument jeweils, dass mehrere vorkommende aber in den Formeln gleich bezeichnete Gruppen jeweils unterschiedliche Bedeutungen aufweisen können.

Weiterhin steht der Index s für einen Wert von > 1.5, insbesondere von 2 bis 12.

Derartige Epoxid-Festharze sind kommerziell erhältlich beispielsweise von Dow oder Huntsman oder Hexion.

Verbindungen der Formel (A-I) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxidharze im engeren Sinn, d.h. wo der Index s einen Wert von > 1.5 aufweist.

Bevorzugte Epoxid-Flüssigharze weisen die Formel (A-II) auf

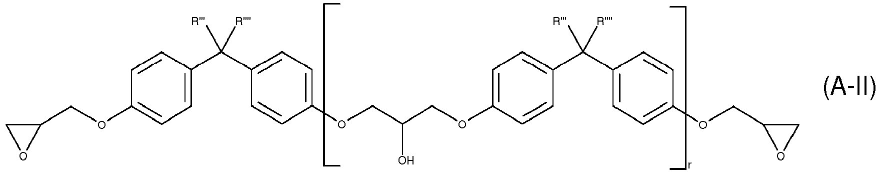

Hierbei stehen die Substituenten R‴ und Rʺʺ unabhängig voneinander entweder für H oder CH₃. Weiterhin steht der Index r für einen Wert von 0 bis 1. Bevorzugt steht r für einen Wert von kleiner als 0.2.

Es handelt sich somit vorzugsweise um Diglycidylether von Bisphenol-A (DGEBA), von Bisphenol-F sowie von Bisphenol-A/F (Die Bezeichnung ,A/F' verweist hierbei auf eine Mischung von Aceton mit Formaldehyd, welche als Edukt bei dessen Herstellung verwendet wird). Solche Flüssigharze sind beispielsweise als Araldite^{®} GY 250, Araldite^{®} PY 304, Araldite^{®} GY 282 (Huntsman, bzw. Hexion) oder D.E.R.^{™} 331 oder D.E.R.^{™} 330 (Dow) oder Epikote 828 (Hexion) erhältlich.

Bevorzugt stellt das Epoxidharz **A** ein Epoxid-Flüssigharz der Formel (A-II) dar. In einer noch mehr bevorzugten Ausführungsform enthält die hitzehärtende Epoxidharzzusammensetzung sowohl mindestens ein Epoxid-Flüssigharz der Formel (A-II) als auch mindestens ein Epoxid-Festharz der Formel (A-I).

Der Anteil von Epoxidharzes **A** beträgt vorzugsweise 10 - 85 Gew.-%, insbesondere 25 - 70 Gew.-%, bevorzugt 25 - 60 Gew.-%, 30 - 60 Gew.-%, besonders bevorzugt 30 - 50 Gew.-%, bezogen auf das Gesamtgewicht der hitzehärtenden Epoxidharzzusammensetzung.

Die hitzehärtende Epoxidharzzusammensetzung enthält mindestens einen Härter **B** für Epoxidharze, welcher durch erhöhte Temperatur aktiviert wird, vorzugsweise bei Temperaturen von 70°C oder mehr. Es handelt sich hierbei vorzugsweise um einen Härter, welcher ausgewählt ist aus der Gruppe bestehend aus Dicyandiamid, Guanamine, Guanidine, Aminoguanidine und deren Derivate. Weiterhin möglich sind beschleunigend wirksame Härter, wie substituierte Harnstoffe, wie beispielsweise 3-(3-Chlor-4-methylphenyl)-1,1-dimethylharnstoff (Chlortoluron) oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin können Verbindungen der Klasse der Imidazole, wie 2-Isopropylimidazol oder 2-Hydroxy-N-(2-(2-(2-hydroxyphenyl)-4,5-dihydroimidazol-1-yl)ethyl)benzamid und Amin-Komplexe eingesetzt werden.

Bevorzugt handelt es sich beim Härter **B** um einen Härter, welcher ausgewählt ist aus der Gruppe bestehend aus Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff(Diuron), sowie Imidazole und Amin-Komplexe.

Besonders bevorzugt als Härter **B** ist Dicyandiamid.

Weiter ist es bevorzugt, dass sich der Härter **B** in der ersten Komponente **K1** befindet.

Die Menge des Härters **B** für Epoxidharze, welcher durch erhöhte Temperatur aktiviert wird, beträgt vorteilhaft 0.1 - 30 Gew.-%, insbesondere 0.2 - 10 Gew.-%, bevorzugt 1 ― 10 Gew.-%, insbesondere bevorzugt 5 ― 10 Gew.-%, bezogen auf das Gewicht des Epoxidharzes **A.**

Vorzugsweise beträgt das Verhältnis des Anteils Dicyandiamid **B** in Gramm pro mol Epoxidgruppen des Epoxidharz **A** von 10 ― 20 g/mol, insbesondere 12.5 - 17.5 g/mol Epoxidgruppen.

Die zweite Komponente **K2** der hitzehärtenden Epoxidharzzusammensetzung enthält mindestens ein tertiäres Amin **tAM** der Formel (I), wobei R₁ für eine Alkylengruppe mit 1 - 20 C-Atomen, welche gegebenenfalls substituiert ist und gegebenenfalls Heteroatome aufweist, steht und n für einen Wert von 1 - 3 steht.

Vorzugsweise steht R₁ für CH₂ oder -CH₂-NH-C₃H₆ und n = 1 - 3, insbesondere 3.

Vorzugsweise ist das tertiäre Amin **tAM** ausgewählt aus der Gruppe bestehend aus 2-(Dimethylaminomethyl)phenol, 2,6-Bis(Dimethylaminomethyl)phenol, 2,4-Bis(Dimethylaminomethyl)phenol, 2,4,6-Tris(Dimethylaminomethyl)phenol und 2,4,6-tris(((3-(dimethylamino)propyl)amino)methyl)phenol.

Besonders bevorzugt ist das tertiäre Amin **tAM** ausgewählt aus der Gruppe bestehend aus 2,4,6-tris(((3-(dimethylamino)propyl)amino)methyl)phenol und 2,4,6-Tris(Dimethylaminomethyl)phenol, am meisten bevorzugt 2,4,6-Tris(Dimethylaminomethyl)phenol.

2,4,6-Tris(Dimethylaminomethyl)phenol ist beispielweise kommerziell erhältlich als Ancamine K54^{®} bei Air Products GmbH (Deutschland).

Das Verhältnis des Anteils tertiäres Amin **tAM** in Gramm pro mol Epoxidgruppen des Epoxidharz **A** beträgt von 2.4 - 19.6 g/mol Epoxidgruppen.

Vorzugsweise beträgt das Verhältnis des Anteils tertiäres Amin **tAM** in Gramm pro mol Epoxidgruppen des Epoxidharz **A** von 2.4 - 13.7 g/mol, von 3.1 - 13.7 g/mol, von 3.1 - 11.8 g/mol, insbesondere von 3.1 - 9.8 g/mol, Epoxidgruppen. Dies ist dahingehend von Vorteil, dass dadurch hohe Werte für die Zugscherfestigkeit nach einer Erhitzung auf eine Temperatur von 90 - 130°C, insbesondere von 110 - 120°C, für 10 s - 300 s, insbesondere 30 s - 90 s, sowie eine hohe Zugscherfestigkeit nach der Aushärtung bei einer Temperatur im Bereich von 100 bis 220°C, vorzugsweise 160 bis 190°C, für 10 min - 6 h, insbesondere 10 min - 60 min, erhalten werden.

Weiter kann es vorteilhaft sein, wenn das Verhältnis des Anteils tertiäres Amin **tAM** in Gramm pro mol Epoxidgruppen des Epoxidharz **A** von 4.7 - 13.7 g/mol, insbesondere von 5.9 - 9.8 g/mol, Epoxidgruppen beträgt. Dies ist hohen Werten für die Zugscherfestigkeit nach einer Erhitzung auf eine Temperatur von 90 - 130°C, insbesondere von 110 - 120°C, für 10 s - 300 s, insbesondere 30 s - 90 s, sowie einer hohen Zugscherfestigkeit nach der Aushärtung bei einer Temperatur im Bereich von 100 bis 220°C, vorzugsweise 160 bis 190°C, für 10 min ― 6 h, insbesondere 10 min - 60 min, zuträglich.

Die zweite Komponente **K2** der hitzehärtenden Epoxidharzzusammensetzung enthält mindestens ein primäres Amin **pAM** ausgewählt aus der Liste bestehend aus 1,3-Xylylendiamin (MXDA), 1,4-Xylylendiamin (PXDA), 1,3,5-Tris-(aminomethyl)benzol. Bevorzugt handelt es sich um 1,3-Xylylendiamin (MXDA).

Das Verhältnis des Anteils primäres Amin **pAM** in Gramm pro mol Epoxidgruppen des Epoxidharz **A** beträgt von 6 ― 31 g/mol Epoxidgruppen.

Vorzugsweise beträgt das Verhältnis des Anteils des primären Amin **pAM** in Gramm pro mol Epoxidgruppen des Epoxidharz A von 6 ― 27 g/mol, von 6 ― 24 g/mol, von 6 ― 16 g/mol, von 6 ― 14 g/mol, von 7 ― 14 g/mol, insbesondere von 7 ― 12 g/mol, Epoxidgruppen. Dies ist dahingehend von Vorteil dass dadurch hohe Werte für die Zugscherfestigkeit nach einer Erhitzung auf eine Temperatur von von 90 - 130°C, insbesondere von 110 - 120°C, für 10 s - 300 s, insbesondere 30 s - 90 s, sowie eine hohe Zugscherfestigkeit nach der Aushärtung bei einer Temperatur im Bereich von 100 bis 220°C, vorzugsweise 160 bis 190°C, für 10 min ― 6 h, insbesondere 10 min - 60 min, erhalten werden.

Weiterhin ist bevorzugt, wenn die hitzehärtende Epoxidharzzusammensetzung zusätzlich mindestens einen Füllstoff **F** enthält. Bevorzugt handelt es sich hierbei um Russ, Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff **F** sind sowohl die organisch beschichteten als auch die unbeschichteten kommerziell erhältlichen und dem Fachmann bekannten Formen gemeint.

Vorteilhaft beträgt der Gesamtanteil des gesamten Füllstoffs **F** 2 - 50 Gewichts-%, vorzugsweise 10 ― 40 Gewichts-%, insbesondere 20 - 40 Gewichts-%, bezogen auf das Gesamtgewicht der hitzehärtenden Epoxidharzzusammensetzung.

Vorteilhaft enthält die Zusammensetzung zusätzlich mindestens einen Epoxidgruppen-tragenden Reaktivverdünner **G.** Bei diesen Reaktivverdünnern **G** handelt es sich insbesondere um:
- Glycidylether von monofunktionellen gesättigten oder ungesättigten, verzweigten oder unverzweigten, zyklischen oder offenkettigen C₄ - C₃₀ Alkoholen, z.B. Butanolglycidylether, Hexanolglycidylether, 2-Ethylhexanolglycidylether, Allylglycidylether, Tetrahydrofurfuryl- und Furfurylglycidylether, Trimethoxysilylglycidylether etc.
- Glycidylether von difunktionellen gesättigten oder ungesättigten, verzweigten oder unverzweigten, zyklischen oder offenkettigen C₂ - C₃₀ Alkolen, z.B Ethylenglykol-, Butandiol-, Hexandiol-, Oktandiolgylcidylether, Cyclohexandimethanoldigylcidylether, Neopentylglycoldiglycidylether etc.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan etc.
- Glycidylether von Phenol- und Anilinverbindungen wie Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin etc.
- Epoxidierte Amine wie N, N-Diglycidylcyclohexylamin etc.
- Epoxidierte Mono- oder Dicarbonsäuren wie Neodecansäure-glycidylester, Methacrylsäureglycidylester, Benzoesäureglycidylester, Phthalsäure-, Tetra- und Hexahydrophthalsäurediglycidylester, Diglycidylester von dimeren Fettsäuren etc.
- Epoxidierte di- oder trifunktionelle, nieder- bis hochmolekulare Polyetherpolyole wie Polyethylenglycol-diglycidylether, Polypropyleneglycol-diglycidylether etc.

Besonders bevorzugt sind Hexandioldiglycidylether, Kresylglycidylether, p-*tert.*-Butylphenylglycidylether, Polypropylenglycoldiglycidylether und Polyethylenglycoldiglycidylether.

Vorteilhaft beträgt der Gesamtanteil des epoxidgruppentragenden Reaktivverdünners **G** 0.1 - 20 Gewichts-%, vorzugsweise 0.5 - 8 Gewichts-%, bezogen auf das Gesamtgewicht der hitzehärtenden Epoxidharzzusammensetzung.

Vorzugsweise weist die Komponente **K2** zusätzlich einen vorgenannten Füllstoffs **F** auf. Insbesondere handelt es sich bei dem Füllstoffs **F** in der Komponente **K2** um pyrogene Kieselsäure. Weiter ist es bevorzugt, dass das Gewichtsverhältnis von der Summe von (tertiärem Amin **tAM** + primärem Amin **pAM**) zu der Gesamtmenge des Füllstoffs **F** von 3:1 bis 1:3, insbesondere 1.5:1 bis 1:1.5, beträgt.

Weiter ist es vorteilhaft, wenn das Gesamtgewicht der Komponente **K2** weniger als 20 Gew.-%, insbesondere weniger als 10 Gew.-%, insbesondere weniger als 5 Gew.-%, beträgt, bezogen auf das Gesamtgewicht der hitzehärtenden Epoxidharzzusammensetzung.

Vorzugsweist besteht die Komponente **K2** zu mehr als 50 Gew.-%, mehr als 70 Gew.-%, mehr als 80 Gew.-%, mehr als 90 Gew.-%, mehr als 95 Gew.-%, mehr als 98 Gew.-%, aus tertiärem Amin **tAM,** primärem Amin **pAM** und Füllstoff **F,** bezogen aus das Gesamtgewicht der Komponente **K2.**

Eine solche vorgenannte Komponente **K2** ist dahingehend vorteilhaft, dass zu einer herkömmlichen einkomponentigen hitzehärtenden Epoxidharzzusammensetzung eine solche Komponente **K2** zusätzlich zugegeben werden kann, wenn Bedarf nach einer teilweisen Aushärtung/Vorhärtung mittels kurzfristiger Wärmebehandlung zur Erreichung einer ausreichenden Festigkeit und Haftung für den Weitertransport eines damit verfügten Bauteils besteht. Insbesondere wenn eine Erhöhung der Zugscherfestigkeit nach einer Erhitzung auf eine Temperatur von 90 - 130°C, insbesondere von 110 - 120°C, für 10 s - 300 s, insbesondere 30 s - 90 s, gewünscht ist.

Ein weiterer Aspekt der vorliegenden Erfindung ist daher die Verwendung einer vorgehend genannten Komponente **K2** zur teilweisen Aushärtung einer hitzehärtenden Epoxidharzzusammensetzung umfassend:
- eine erste Komponente **K1,** wie sie vorgehend erwähnt worden ist, und
- mindestens einen Härter **B** für Epoxidharze, welcher durch erhöhte Temperatur aktiviert wird, wie er vorgehend erwähnt worden ist.

Vorzugsweise handelt es sich bei der teilweisen Aushärtung der hitzehärtenden Epoxidharzzusammensetzung um eine teilweise Aushärtung mittels kurzfristiger Wärmebehandlung zur Erreichung einer ausreichenden Festigkeit und Haftung für den Weitertransport eines Bauteils. Insbesondere um eine Erhöhung der Zugscherfestigkeit nach einer Erhitzung auf eine Temperatur von 90 - 130°C, insbesondere von 110 - 120°C, für 10 s - 300 s, insbesondere 30 s - 90 s. Die Messung der Zugscherfestigkeit erfolgt typischerweise nach DIN EN 1465, besonders bevorzugt wie in dem Beispielteil beschrieben.

Die Erhöhung der Zugscherfestigkeit beträgt vorzugsweise mehr als 5%, mehr als 10%, mehr als 15%, mehr als 20%, insbesondere mehr als 30% und vorzugsweise weniger als 70%, der ausgehärteten hitzehärtenden Epoxidharzzusammensetzung. Vorzugsweise erfolgt die Aushärtung der Epoxidharzzusammensetzung wie sie nachfolgend als Schritt d) beschrieben wird. Es ist weiter bevorzugt, wenn die Erhöhung der Zugscherfestigkeit zu einem Wert über 1 MPa, vorzugsweise über 2 MPa, insbesondere über 3 MPa führt. Die Erhöhung der Zugscherfestigkeit bezieht sich auf eine Erhöhung gegenüber einer hitzehärtenden Epoxidharzzusammensetzung umfassend eine vorgehend beschriebenen ersten Komponente **K1** sowie mindestens einen Härter B für Epoxidharze, welcher durch erhöhte Temperatur aktiviert wird.

Die hitzehärtende Epoxidharzzusammensetzung weist vorzugsweise bei 25°C unmittelbar, insbesondere 1-60 Sekunden, nach dem Mischen eine Viskosität von 500 - 4000 Pas auf. Dadurch lässt sich die Zusammensetzung bei Raumtemperatur leicht applizieren. Die in diesem Dokument angegebenen Viskositäten wurden auf einem Rheometer (Physica MCR 101, Anton Paar) mittels oszillographischen Messung (Spalt: 1000 µm, Platte/Platte, Plattendurchmesser: 25 mm, Frequenz: 5 Hz, Solldeformation: 0.01) in einem Temperaturbereich von 23 - 70°C (Aufheizrate: 10°C/min) gemessen.

Es hat sich gezeigt, dass sich die beschriebenen hitzehärtenden Epoxidharzzusammensetzungen besonders zur Verwendung als hitzehärtende Klebstoffe, insbesondere als hitzehärtender Rohbauklebstoff im Fahrzeugbau und/oder für Bördelfalzverklebungen, eignen. Ein derartiger einkomponentiger Klebstoff weist breite Einsatzmöglichkeiten auf.

Ein Aspekt der vorliegenden Erfindung betrifft daher die Verwendung der beschriebenen hitzehärtenden Epoxidharzzusammensetzungen als hitzehärtender Klebstoff, insbesondere als hitzehärtender Rohbauklebstoff im Fahrzeugbau und/oder für Bördelfalzverklebungen.

Solche Klebstoffe werden für das Verkleben von hitzestabilen Materialien benötigt. Unter hitzestabilen Materialien werden Materialien verstanden, welche bei einer Aushärtetemperatur von 100 - 220°C, vorzugsweise 120 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie und/oder für Bördelfalzverklebungen. Die bevorzugten Metalle sind vor allem Stahl, insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Die erfindungsgemässen hitzehärtenden Zusammensetzungen ermöglichen Klebstoffe, welche nach kurzzeitiger Erhitzung von 10 bis 300 Sekunden, insbesondere 30 bis 90 Sekunden, auf eine Temperatur von 90°C bis 130°C eine ausreichende Festigkeit und Haftung aufweisen, um transportbedingten mechanischen Belastungen zu widerstehen und im vollständig ausgehärteten Zustand in Bezug auf Festigkeit und Haftung den Anforderungen eines strukturellen Klebstoffs genügen.

Ein solcher Klebstoff wird insbesondere zuerst mit den zu verklebenden Materialien bei einer Temperatur von zwischen 10°C und 80°C, insbesondere zwischen 10°C und 60°C, kontaktiert und später die Epoxidharzzusammensetzung auf eine Temperatur von 90 - 130°C, insbesondere von 110 - 120°C erhitzt und danach bei einer Temperatur im Bereich von 100 bis 220°C, ausgehärtet.

Ein weiterer Aspekt der vorliegenden Erfindung betrifft ein Verfahren zur Verklebung von hitzestabilen Substraten, welches die Schritte umfasst:
a) Applizieren einer hitzehärtenden Epoxidharzzusammensetzung wie sie vorgehend beschrieben ist auf die Oberfläche eines hitzestabilen Substrates **S1,** insbesondere eines Metalls;
b) Kontaktieren der applizierten hitzehärtenden Epoxidharzzusammensetzung mit der Oberfläche eines weiteren hitzestabilen Substrates **S2,** insbesondere eines Metalls;
c) Erhitzen der Epoxidharzzusammensetzung auf eine Temperatur von 90 - 130°C, insbesondere von 110 - 120°C;
d) Aushärten der Epoxidharzzusammensetzung bei einer Temperatur im Bereich von 100 bis 220°C, vorzugsweise 140 - 220°C, insbesondere von 140 - 200°C, bevorzugt zwischen 160 und 190°C.

Das Substrat **S2** besteht hierbei aus dem gleichen oder einem unterschiedlichen Material wie das Substrat **S1.**

Die Substrate **S1** und/oder **S2** sind insbesondere die vorgängig erwähnten Metalle und Kunststoffe.

Es ist vorteilhaft, wenn in dem Schritt c) Erhitzen der Epoxidharzzusammensetzung auf eine Temperatur von 90 - 130°C, insbesondere von 110 - 120°C, die Epoxidharzzusammensetzung für 10 s - 300 s, 20 s - 200 s, 30 s - 120 s, 30 s - 90 s, besonders bevorzugt 30 s - 60 s, bei der vorgenannten Temperatur belassen wird.

Vorzugsweise erfolgt in dem Schritt c) das Erhitzen der Epoxidharzzusammensetzung mittel Induktion.

Es ist weiter vorteilhaft, wenn der Schritt a) innerhalb von 20 min, vorzugsweise 15min, insbesondere 10 min, nach dem Mischen der Epoxidharzzusammensetzung ausgeführt wird.

Vorzugsweise wird in dem Schritt d) Aushärten der Epoxidharzzusammensetzung bei einer Temperatur im Bereich von 100 bis 220°C, vorzugsweise 140 - 220°C, insbesondere von 140 - 200°C, bevorzugt zwischen 160 und 190°C, die Epoxidharzzusammensetzung für 10 min - 6 h, 10 min - 2 h, 10 min - 60 min, 10 min - 30 min, besonders bevorzugt 10 min - 25 min, bei der vorgenannten Temperatur belassen.

Weiter ist es bevorzugt, wenn zwischen Schritt c) und d) die Epoxidharzzusammensetzung auf eine Temperatur von 0 - 50°C, 10 - 40°C insbesondere von 15 - 30°C gebracht wird, vorzugsweise für mehr als 5 min, mehr als 10 min, mehr als 20 min, mehr als 25 min, insbesondere bevorzugt 30-60 min.

Vorzugsweise findet zwischen Schritt c) und d) mit dem Verbund der Epoxidharzzusammensetzung mit den hitzestabilen Substraten S1 und S2 ein örtlicher Transportschritt statt.

Weiter ist es auch vorteilhaft, wenn zwischen Schritt c) und d) eine Zeitspanne von mehr als 5 min, mehr als 10 min, mehr als 20 min, mehr als 25 min insbesondere bevorzugt 30-120 min, am meisten bevorzugt 30 - 60 min, liegt.

Weiter liegt vorzugweise zwischen Schritt a) und c) eine Zeitspanne von weniger als 12 h, weniger als 3 h, insbesondere bevorzugt 30 - 120 min.

Weiter kann es vorteilhaft sein, wenn es sich bei dem Schritt b) kontaktieren der applizierten hitzehärtenden Epoxidharzzusammensetzung mit der Oberfläche eines weiteren hitzestabilen Substrates **S2** um ein Bördeln eines hitzestabilen Substrates **S2** mit einem hitzestabilen Substrates **S1** handelt, insbesondere handelt es sich bei den hitzestabilen Substraten um ein Aussenblech und ein Innenblech.

Aus vorgenannten Verfahren zum Verkleben von hitzestabilen Materialien resultiert ein verklebter Artikel. Ein derartiger Artikel ist vorzugsweise ein Fahrzeug oder ein Teil eines Fahrzeugs, insbesondere ein Anbauteil eines Fahrzeugs.

Einen weiteren Aspekt der vorliegenden Erfindung betrifft daher ein verklebter Artikel erhalten aus dem vorgenannten Verfahren. Ferner eignen sich die erfindungsgemässen Zusammensetzungen nicht nur für den Automobilbau sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen.

Die mittels einer erfindungsgemässen Zusammensetzung verklebten Materialien kommen bei Temperaturen zwischen typischerweise 120°C und -40°C, vorzugsweise zwischen 100°C und -40°C, insbesondere zwischen 80°C und -40°C zum Einsatz.

Überraschenderweise wurde gefunden, dass andere Beschleuniger für hitzehärtende Epoxidharzzusammensetzungen die Anforderungen in Bezug auf ausreichende Festigkeit und Haftung sowohl nach kurzfristiger Erwärmung, insbesondere mittels Induktion, sowie nach nachträglicher Aushärtung nicht erfüllen. So ist beispielsweise in Tabelle 3 ersichtlich, dass beispielsweise bei der Verwendung von einem tertiären Amin (HMTA, Ineos) oder einem Imidazol (Imidazol, Fluka, Schweiz), jeweils alleine oder in Kombination mit K54, die Festigkeit und Haftung nach kurzfristiger Erwärmung mittels Induktion (30 s, resp. 90 s, bei 120°C) nicht ausreicht. Weiter ist in der Tabelle 3 ersichtlich, dass K54 alleine beide Anforderungen gleichzeitig nicht zu erfüllen vermag.

Besonders bevorzugt handelt es sich um hitzehärtende Epoxidharzzusammensetzungen, welche nach dem Schritt c), insbesondere 5 - 60 min, bevorzugt 10 ― 20 min nach dem Schritt c) eine Zugscherfestigkeit, insbesondere gemessen nach DIN EN 1465, besonders bevorzugt wie in dem Beispielteil beschrieben, von mehr als 1 MPa, mehr als 2 MPa, mehr als 3 MPa, aufweisen.

Weiter bevorzugt sind hitzehärtende Epoxidharzzusammensetzungen, welche nach dem Schritt d) eine Zugscherfestigkeit, insbesondere gemessen nach DIN EN 1465, besonders bevorzugt wie in dem Beispielteil beschrieben, von mehr als 15 MPa, mehr als 20 MPa, mehr als 25 MPa, aufweisen.

### Beispiele

Im Folgenden werden einige Beispiele aufgeführt, welche die Erfindung weiter veranschaulichen, den Umfang der Erfindung aber in keiner Weise beschränken sollen.

### Herstellung eines Zähigkeitsverbesserers ("D-1")

150 g Poly-THF 2000 (OH-Zahl 57 mg/g KOH) und 150 Liquiflex H (OH-Zahl 46 mg/g KOH) wurden 30 Minuten unter Vakuum bei 105°C getrocknet. Nachdem die Temperatur auf 90°C reduziert worden war, wurden 61.5 g IPDI und 0.14 g Dibutylzinndilaurat zugegeben. Die Reaktion wurde unter Vakuum bei 90°C bis zur Konstanz des NCO-Gehaltes bei 3.10% nach 2.0 h geführt (berechneter NCO-Gehalt: 3.15%). Anschliessend wurden 96.1 g Cardanol als Blockierungsmittel zugegeben. Es wurde bei 105°C unter Vakuum weitergerührt bis kein freies NCO mehr nachgewiesen werden konnte. Das Produkt wurde so als Zähigkeitsverbesserer ***D-1*** verwendet.

**Tabelle 1, Eingesetzte Rohstoffe.**

| | |
|---|---|
| A-Harz flüssig | Epoxid-Flüssigharz, D.E.R. 331 (Bisphenol-A-diglycidylether), Dow |
| Reaktivverdünner | Hexandiol-glycidylether, Denacol EX-212, Nagase America |
| B-1 | Härter, Dicyandiamid (= *"Dicy*") |
| B-2 | Härter, substituierter Harnstoff |
| Füllstoffgemisch | Gemisch aus Calciumcarbonat, Calciumoxid, pyrogene Kieselsäure |
| K54 | Ancamine K54^{®}, 2,4,6-Tri(Dimethylaminomethyl)phenol, Air Products GmbH (Deutschland) |
| MXDA | 1,3-Xylylendiamin (MXDA) |
| HMTA | Hexamethylenetetramin, Ineos |
| Imidazol | Imidazol, Fluka, Schweiz |
| | Poly-THF 2000 (Difunktionelles Polybutylenglykol) (OH-Equivalentgewicht = ca. 1000 g/OH-Equivalent), BASF |
| | Liquiflex H (Hydroxylterminertes Polybutadien) (OH-Equivalentgewicht = ca. 1230 g/OH-Equivalent), Krahn |
| | Isophoron-diisocyanat (= "*IPDI"*), Evonik |
| | Cardolite NC-700 (Cardanol, meta-substituiertes Alkenylmono-Phenol), Cardolite |

**Tabelle 2, Basiszusammensetzung**

| | EP-Zahl | Basiszusammensetzung | |
|---|---|---|---|
| | [mol Epoxidgruppen / 100g Harz] | [Gew.-%] | [g] |
| A-Harz flüssig | 0.54 | 46.5 | 23.25 |
| Reaktivverdünner | 0.80 | 0.5 | 0.25 |
| D-1 | | 20 | 10 |
| B-1 | | 3.7 | 1.85 |
| B-2 | | 0.2 | 0.1 |
| Füllstoffgemisch | | 29.1 | 14.55 |
| Summe: | | 100 | 50 |

### Herstellung der Zusammensetzungen

Es wurden gemäss Angaben in den Tabellen 1-2 jeweils Ansätze zu 50 g der Basiszusammensetzung hergestellt. Danach wurden gemäss Angaben der Tabelle 3 durch die zusätzliche Zugabe von gegebenenfalls K54, MXDA, HMTA oder Imidazol die Referenzzusammensetzungen ***Ref.1*** - ***Ref.25*** sowie die erfindungsgemässen Zusammensetzungen ***Ex.1 ― Ex.10*** hergestellt.

### Berechnung von g/mol Epoxidgruppen für tAM, respektive pAM (g/mol EP)

Epoxidharze werden nach ihrem Epoxidgehalt eingeteilt, der auch als Epoxid-Zahl (auch EP-Zahl) bekannt ist. Im vorliegenden Dokument gibt die Epoxid-Zahl die Anzahl der Epoxidgruppen in Mol wieder, die man in 100 Gramm Kunstharz findet. So steht beispielsweise in der Tabelle 2 als Epoxid-Zahl unter "EP-Zahl" vereinfacht ein Zahlenwert wie beispielsweise "0.54" für eine Epoxid-Zahl von 0.54 mol Epoxidgruppen/100g Harz.

Das Verhältnis des Anteils tertiäres Amin **tAM** in Gramm pro mol Epoxidgruppen des Epoxidharz **A** (in Tabelle 3 "g/mol EP" genannt) wird beispielsweise für die Zusammensetzung Ex.1 folgendermassen berechnet: (Menge in Gramm von K54) / ((Menge in Gramm von A-Harz flüssig*Epoxidzahl von A-Harz flüssig)+(Menge in Gramm von Reaktivverdünner*Epoxidzahl von Reaktivverdünner)).

Das Verhältnis des Anteils primäres Amin **pAM** in Gramm pro mol Epoxidgruppen des Epoxidharz **A** (in Tabelle 3 "g/mol EP" genannt) wird beispielsweise für die Zusammensetzung Ex.1 folgendermassen berechnet: (Menge in Gramm von MXDA) / ((Menge in Gramm von A-Harz flüssig*Epoxidzahl von A-Harz flüssig)+(Menge in Gramm von Reaktivverdünner*Epoxidzahl von Reaktivverdünner)).

### Prüfmethoden:

### Zugscherfestigkeit (ZSF) (DIN EN 1465) nach Induktion ("ZSF Ind")

Gereinigte und mit Anticorit PL 3802-39S rückbeölte Prüfbleche von Stahl HDG H420 (Dicke 1,5mm) wurden auf einer Klebfläche von 25 x 10mm mit Glaskugeln als Abstandshalter in einer Schichtdicke von 0,3 mm mit dem Klebstoff verklebt. Die Klebstoffzusammensetzungen wurden maximal 8 min nach Mischen auf die Klebfläche appliziert.

Unmittelbar anschliessend wurde die Probe mittels Induktion für 30 Sekunden, respektive 90 Sekunden, bei 120°C ausgehärtet. Auf der Oberfläche des Prüfkörpers (Substratoberfläche) war jeweils eine Temperatursonde befestigt. Das Erreichen der angegebenen Temperatur auf 1°C genau war jeweils der Beginn der Messung der Aushärtungszeit. Das Aufheizen der Probe auf 120°C dauerte jeweils 30 Sekunden. Das Aushärtungsverfahren für die Proben von Ex.1 dauerte beispielsweise 30 Sekunden Aufheizzeit bis zum Erreichen der 120°C sowie zusätzlich 30 Sekunden Aushärtungszeit bei 120°C. Das Induktionsgerät ist von der Firma IFF GmbH Deutschland (EW020T Steuergerät, LA-PEZ Induktionsgerät).

15 Minuten nach dem Induktionsverfahren wurden die Zugscherfestigkeit der Proben bestimmt. Die Zugscherfestigkeit wurde auf einer Zugmaschine bei einer Zuggeschwindigkeit von 10mm/min in einer 3-fach Bestimmung gemäss DIN EN 1465 bestimmt.

Die Zugscherfestigkeit wurde auf einer Zugmaschine bei einer Zuggeschwindigkeit von 10mm/min in einer 3-fach Bestimmung gemäss DIN EN 1465 bestimmt.

### Zugscherfestigkeit (ZSF) (DIN EN 1465) nach Induktion ("ZSF Ind + Ofen")

Gereinigte und mit Anticorit PL 3802-39S rückbeölte Prüfbleche von Stahl HDG H420 (Dicke 1,5mm) wurden auf einer Klebfläche von 25 x 10mm mit Glaskugeln als Abstandshalter in einer Schichtdicke von 0,3 mm mit dem Klebstoff verklebt.

Unmittelbar anschliessend wurden die Proben mittels Induktion wie vorgehend beschrieben vorgehärtet. Danach wurden die Proben bei Raumtemperatur belassen und 2 Stunden danach für 35 min bei 175°C Ofentemperatur ausgehärtet. Danach wurde die Zugscherfestigkeit auf einer Zugmaschine bei einer Zuggeschwindigkeit von 10mm/min in einer 3-fach Bestimmung gemäss DIN EN 1465 bestimmt.

**Tabelle 3, n.b. = nicht bestimmt**

| | | **Basisformulierung** | **K54** | | **MXDA** | | **HMTA** | **Imidazol** | **ZSF Ind** | **ZSF Ind +Ofen** |
|---|---|---|---|---|---|---|---|---|---|---|
| | | g | g | g/mol EP | g | g/mol EP | g | g | [MPa] | [MPa] |
| **Ind 30 Sec 120°C** | Ref.1 | **50.00** | - | | - | | | | **0.00** | **28.10** |
| | Ref.2 | **50.00** | **0.51** | **4.0** | - | - | | | **0.04** | **23.70** |
| | Ref.3 | **50.00** | **1.55** | **12.2** | - | - | | | **0.65** | **20.90** |
| | Ref.4 | **50.00** | **5.56** | **43.6** | - | - | | | **7.89** | **14.50** |
| | Ref.5 | **50.00** | - | - | - | - | **2.63** | | **0.04** | **22.90** |
| | Ref.6 | **50.00** | **0.25** | **2.0** | **0.51** | **4.0** | | | **0.05** | **22.90** |
| | Ref.7 | **50.00** | **0.26** | **2.0** | **1.03** | **8.1** | | | **0.05** | **26.20** |
| | Ref.8 | **50.00** | **0.26** | **2.0** | **1.55** | **12.2** | | | **0.09** | **24.50** |
| | Ref.9 | **50.00** | **0.51** | **4.0** | **0.51** | **4.0** | | | **0.22** | **26.40** |
| | Ex.8 | **50.00** | **0.52** | **4.1** | **1.03** | **8.1** | | | **0.20** | **21.70** |
| | Ex.9 | **50.00** | **0.52** | **4.1** | **1.56** | **12.2** | | | **0.31** | **17.20** |
| | Ref.9 | **50.00** | **0.77** | **6.0** | **0.51** | **4.0** | | | **0.35** | **23.10** |
| | Ex.1 | **50.00** | **0.78** | **6.1** | **1.04** | **8.2** | | | **1.03** | **20.40** |
| | Ex.2 | **50.00** | **0.79** | **6.2** | **1.57** | **12.3** | | | **2.63** | **22.20** |
| | Ex.3 | **50.00** | **1.04** | **8.2** | **1.04** | **8.2** | | | **2.62** | **25.90** |
| | Ex.4 | **50.00** | **1.04** | **8.2** | **1.57** | **12.3** | | | **4.50** | **20.20** |
| | Ex.5 | **50.00** | **1.57** | **12.3** | **1.57** | **12.3** | | | **10.90** | **18.60** |
| | Ex.10 | **50.00** | **0.52** | **4.1** | **1.03** | **8.1** | | | **0.06** | **23.90** |
| **Ind 90 Sec 120°C** | Ref.10 | **50.00** | - | - | - | - | | | **0.00** | **29.80** |
| | Ref.11 | **50.00** | **0.51** | **4.0** | - | - | | | **0.08** | **28.80** |
| | Ref.12 | **50.00** | **5.56** | **43.6** | - | - | | | **5.95** | **13.30** |
| | Ref.13 | **50.00** | **0.25** | **2.0** | **0.25** | **2.0** | | | **0.06** | **28.20** |
| | Ref.14 | **50.00** | **0.25** | **2.0** | **0.51** | **4.0** | | | **0.09** | **25.90** |
| | Ref.15 | **50.00** | **0.26** | **2.0** | **1.03** | **8.1** | | | **0.31** | **22.20** |
| | Ref.16 | **50.00** | **0.38** | **3.0** | **0.25** | **2.0** | | | **0.05** | **21.70** |
| | Ref.17 | **50.00** | **0.38** | **3.0** | **0.51** | **4.0** | | | **0.33** | **25.80** |
| | Ex.6 | **50.00** | **0.39** | **3.1** | **1.03** | **8.1** | | | **1.36** | **20.00** |
| | Ref.18 | **50.00** | **0.51** | **4.0** | **0.25** | **2.0** | | | **0.09** | **26.50** |
| | Ref.19 | **50.00** | **0.51** | **4.0** | **0.51** | **4.0** | | | **0.82** | **21.90** |
| | Ex.7 | **50.00** | **0.52** | **4.1** | **1.03** | **8.1** | | | **4.29** | **23.20** |
| | Ref.20 | **50.00** | - | - | - | - | **2** | | **< 0.4** | **n.b.** |
| | Ref.21 | 50.00 | - | - | **2.0** | **15.7** | | | **< 0.4** | **n.b.** |
| | Ref.22 | **50.00** | - | - | - | - | | **2** | **< 0.4** | **n.b.** |
| | Ref.23 | **50.00** | **0.50** | **3.9** | - | - | **1.5** | | **< 0.4** | **n.b.** |
| | Ref.24 | **50.00** | **0.50** | **3.9** | - | - | | **1.5** | **< 0.4** | **n.b.** |

## Patentansprüche

1. Hitzehärtende Epoxidharzzusammensetzung umfassend:
- eine erste Komponente **K1** enthaltend:
- mindestens ein Epoxidharz **A** mit durchschnittlich mehr als einer Epoxidgruppe pro Molekül;
- eine zweite Komponente **K2** enthaltend:
- mindestens ein tertiäres Amin **tAM** der Formel 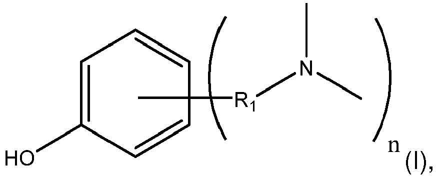 wobei R₁ für eine Alkylengruppe mit 1 - 20 C-Atomen, welche gegebenenfalls substituiert ist und gegebenenfalls Hetereoatome aufweist, steht und n für einen Wert von 1 - 3 steht;
- mindestens ein primäres Amin **pAM** ausgewählt aus der Liste bestehend aus 1,3-Xylylendiamin (MXDA), 1,4-Xylylendiamin (PXDA), 1,3,5-Tris-(aminomethyl)benzol, insbesondere 1,3-Xylylendiamin (MXDA),
wobei die hitzehärtende Epoxidharzzusammensetzung weiter mindestens einen Härter **B** für Epoxidharze enthält, welcher durch erhöhte Temperatur aktiviert wird,
und wobei das Verhältnis des Anteils tertiäres Amin **tAM** in Gramm pro mol Epoxidgruppen des Epoxidharz **A** von 2.4 - 19.6 g/mol Epoxidgruppen beträgt, und wobei das Verhältnis des Anteils primäres Amin **pAM** in Gramm pro mol Epoxidgruppen des Epoxidharz **A** von 6 ― 31 g/mol Epoxidgruppen beträgt.

2. Hitzehärtende Epoxidharzzusammensetzung gemäss einem der vorhergehenden Ansprüche, **dadurch gekennzeichnet, dass** das Verhältnis des Anteils tertiäres Amin **tAM** in Gramm pro mol Epoxidgruppen des Epoxidharz **A** von 2.4 - 13.7 g/mol, von 3.1 - 13.7 g/mol, von 3.1 - 11.8 g/mol, insbesondere von 3.1 - 9.8 g/mol, Epoxidgruppen beträgt.

3. Hitzehärtende Epoxidharzzusammensetzung gemäss einem der vorhergehenden Ansprüche, **dadurch gekennzeichnet, dass** das Verhältnis des Anteils tertiäres Amin **tAM** in Gramm pro mol Epoxidgruppen des Epoxidharz **A** von 4.7 - 13.7 g/mol, insbesondere von 5.9 - 9.8 g/mol, Epoxidgruppen beträgt.

4. Hitzehärtende Epoxidharzzusammensetzung gemäss einem der vorhergehenden Ansprüche, **dadurch gekennzeichnet, dass dadurch gekennzeichnet, dass** R₁ für CH₂ oder -CH₂-NH-C₃H₆ steht und n = 1 - 3, insbesondere 3, steht.

5. Hitzehärtende Epoxidharzzusammensetzung gemäss einem der vorhergehenden Ansprüche, **dadurch gekennzeichnet, dass dadurch gekennzeichnet, dass** das tertiäre Amin **tAM** ausgewählt aus der Gruppe bestehend aus 2-(Dimethylaminomethyl)phenol, 2,6-Bis(Dimethylaminomethyl)phenol, 2,4-Bis(Dimethylaminomethyl)phenol, 2,4,6-Tris(Dimethylaminomethyl)phenol und 2,4,6-tris(((3-(dimethylamino)propyl)amino)methyl)phenol, insbesondere 2,4,6-tris(((3-(dimethylamino)propyl)amino)methyl)phenol und 2,4,6-Tris(Dimethylaminomethyl)phenol, am meisten bevorzugt 2,4,6-Tris(Dimethylaminomethyl)phenol.

6. Hitzehärtende Epoxidharzzusammensetzung gemäss einem der vorhergehenden Ansprüche, **dadurch gekennzeichnet, dass** das Verhältnis des Anteils des primären Amin **pAM** in Gramm pro mol Epoxidgruppen des Epoxidharz **A** von 6 ― 27 g/mol, von 6 ― 24 g/mol, von 6 ― 16 g/mol, von 6 - 14 g/mol, von 7 ― 14 g/mol, insbesondere von 7 ― 12 g/mol, Epoxidgruppen beträgt.

7. Hitzehärtende Epoxidharzzusammensetzung gemäss einem der vorhergehenden Ansprüche, **dadurch gekennzeichnet, dass** es sich bei dem Härter **B** um Dicyandiamid handelt,
wobei insbesondere das Verhältnis des Anteils Dicyandiamid **B** in Gramm pro mol Epoxidgruppen des Epoxidharz **A** von 10 ― 20 g/mol, insbesondere 12.5 ― 17.5 g/mol Epoxidgruppen beträgt.

8. Hitzehärtende Epoxidharzzusammensetzung gemäss einem der vorhergehenden Ansprüche, **dadurch gekennzeichnet, dass** die hitzehärtende Epoxidharzzusammensetzung unmittelbar nach dem Mischen bei 25°C eine Viskosität von 500 - 4000 Pas aufweist.

9. Verfahren zur Verklebung von hitzestabilen Substraten umfassend die Schritte
a) Applizieren einer hitzehärtenden Epoxidharzzusammensetzung gemäss einem der Ansprüche 1 bis 8 auf die Oberfläche eines hitzestabilen Substrates **S1,** insbesondere eines Metalls;
b) Kontaktieren der applizierten hitzehärtenden Epoxidharzzusammensetzung mit der Oberfläche eines weiteren hitzestabilen Substrates **S2,** insbesondere eines Metalls;
c) Erhitzen der Epoxidharzzusammensetzung auf eine Temperatur von 90 - 130°C, insbesondere von 110 - 120°C;
d) Aushärten der Epoxidharzzusammensetzung bei einer Temperatur im Bereich von 100 bis 220°C, vorzugsweise 140 - 220°C, insbesondere von 140 - 200°C, bevorzugt zwischen 160 und 190°C;
wobei das Substrat **S2** aus dem gleichen oder einem unterschiedlichen Material wie das Substrat **S1** besteht.

10. Verfahren gemäss Anspruch 9, wobei in dem Schritt c) Erhitzen der Epoxidharzzusammensetzung auf eine Temperatur von 90 - 130°C, insbesondere von 110 - 120°C, die Epoxidharzzusammensetzung für 10 s - 300 s, 20 s - 200 s, 30 s - 120 s, 30 s - 90 s, besonders bevorzugt 30 s - 60 s, bei der vorgenannten Temperatur belassen wird.

11. Verfahren gemäss einem der Ansprüche 9 oder 10, wobei in dem Schritt d) Aushärten der Epoxidharzzusammensetzung bei einer Temperatur im Bereich von 100 bis 220°C, vorzugsweise 140 - 220°C, insbesondere von 140 - 200°C, bevorzugt zwischen 160 und 190°C, die Epoxidharzzusammensetzung für 10 min - 6 h, 10 min ― 2 h, 10 min - 60 min, 10 min - 30 min, besonders bevorzugt 10 min - 25 min, bei der vorgenannten Temperatur belassen wird.

12. Verfahren gemäss einem der Ansprüche 9 bis 11, wobei zwischen Schritt c) und d) die Epoxidharzzusammensetzung auf eine Temperatur von 0 - 50°C, 10 - 40°C insbesondere von 15 - 30°C gebracht wird, vorzugsweise für mehr als 5 min, mehr als 10 min, mehr als 20 min, mehr als 25 min, insbesondere bevorzugt 30 - 60 min.

13. Verklebter Artikel erhalten aus einem Verfahren gemäss einem der Ansprüche 9 bis 12.

14. Verwendung einer hitzehärtenden Epoxidharzzusammensetzung gemäss einem der Ansprüche 1 bis 8 als hitzehärtender Klebstoff, insbesondere als hitzehärtender Rohbauklebstoff im Fahrzeugbau und/oder für Bördelfalzverklebungen.

15. Verwendung einer Zusammensetzung wie sie als zweite Komponente **K2** in der hitzehärtenden Epoxidharzzusammensetzung gemäss einem der Ansprüche 1 bis 8 erwähnt ist, zur teilweisen Aushärtung einer hitzehärtenden Epoxidharzzusammensetzung umfassend
- eine erste Komponente **K1,** wie sie in einem der Ansprüche 1 bis 8 erwähnt ist, und
- mindestens einen Härter **B** für Epoxidharze, welcher durch erhöhte Temperatur aktiviert wird, wie er in einem der Ansprüche 1 bis 8 erwähnt ist.

## Claims

1. Heat-curing epoxy resin composition comprising:
- a first component **K1** containing:
- at least one epoxy resin **A** with, on average, more than one epoxy group per molecule;
- a second component **K2** containing:
- at least one tertiary amine **tAM** of the formula 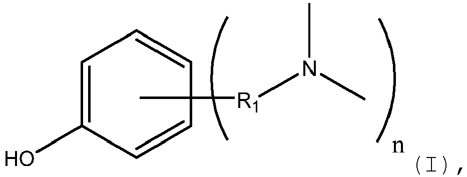 in which R₁ is an alkylene group with 1 - 20 carbon atoms, which is optionally substituted and optionally exhibits heteroatoms, and n is a value of 1 - 3;
- at least one primary amine **pAM** chosen from the list consisting of 1,3-xylylenediamine (MXDA), 1,4-xylylenediamine (PXDA) and 1,3,5-tris(aminomethyl)benzene, in particular 1,3-xylylenediamine (MXDA),
in which the heat-curing epoxy resin composition additionally contains at least one curing agent **B** for epoxy resins, which is activated by elevated temperature,
and in which the ratio of the proportion of tertiary amine **tAM** in grams per mole of epoxy groups of the epoxy resin **A** is 2.4 - 19.6 g/mol of epoxy groups, and in which the ratio of the proportion of primary amine **pAM** in grams per mole of epoxy groups of the epoxy resin **A** is 6 - 31 g/mol of epoxy groups.

2. Heat-curing epoxy resin composition according to one of the preceding claims, **characterized in that** the ratio of the proportion of tertiary amine **tAM** in grams per mole of epoxy groups of the epoxy resin **A** is 2.4 - 13.7 g/mol, 3.1 - 13.7 g/mol, 3.1 - 11.8 g/mol, in particular 3.1 - 9.8 g/mol, of epoxy groups.

3. Heat-curing epoxy resin composition according to either of the preceding claims, **characterized in that** the ratio of the proportion of tertiary amine **tAM** in grams per mole of epoxy groups of the epoxy resin **A** is 4.7 - 13.7 g/mol, in particular 5.9 - 9.8 g/mol, of epoxy groups.

4. Heat-curing epoxy resin composition according to one of the preceding claims, **characterized in that characterized in that** R₁ is CH₂ or -CH₂-NH-C₃H₆ and n = 1 - 3, in particular 3.

5. Heat-curing epoxy resin composition according to one of the preceding claims, **characterized in that characterized in that** the tertiary amine **tAM** is chosen from the group consisting of 2-(dimethylaminomethyl)phenol, 2,6-bis(dimethylaminomethyl)phenol, 2,4-bis(dimethylaminomethyl)phenol, 2,4,6-tris(dimethylaminomethyl)phenol and 2,4,6-tris(((3-(dimethylamino)propyl)amino)methyl)phenol, in particular 2,4,6-tris(((3-(dimethylamino)propyl)amino)methyl)phenol and 2,4,6-tris(dimethylaminomethyl)phenol, most preferably 2,4,6-tris(dimethylaminomethyl)phenol.

6. Heat-curing epoxy resin composition according to one of the preceding claims, **characterized in that** the ratio of the proportion of the primary amine **pAM** in grams per mole of epoxy groups of the epoxy resin **A** is 6 - 27 g/mol, 6 - 24 g/mol, 6 - 16 g/mol, 6 - 14 g/mol, 7 - 14 g/mol, in particular 7 - 12 g/mol, of epoxy groups.

7. Heat-curing epoxy resin composition according to one of the preceding claims, **characterized in that** the curing agent **B** is dicyandiamide,
in which in particular the ratio of the proportion of dicyandiamide **B** in grams per mole of epoxy groups of the epoxy resin **A** is 10 - 20 g/mol, in particular 12.5 - 17.5 g/mol, of epoxy groups.

8. Heat-curing epoxy resin composition according to one of the preceding claims, **characterized in that** the heat-curing epoxy resin composition exhibits, immediately after the mixing at 25°C, a viscosity of 500-4000 Pas.

9. Process for the adhesive bonding of heat-stable substrates, comprising the stages of:
a) applying a heat-curing epoxy resin composition according to one of Claims 1 to 8 to the surface of a heat-stable substrate **S1,** in particular of a metal;
b) bringing the heat-curing epoxy resin composition applied into contact with the surface of a further heat-stable substrate **S2,** in particular of a metal;
c) heating the epoxy resin composition at a temperature of 90 - 130°C, in particular of 110 - 120°C;
d) curing the epoxy resin composition at a temperature in the range from 100 to 220°C, preferably 140 - 220°C, in particular of 140 - 200°C, preferably between 160 and 190°C;
in which the substrate **S2** consists of the same material as or a different material from the substrate **S1**.

10. Process according to Claim 9, in which, in the heating in stage c) of the epoxy resin composition at a temperature of 90 - 130°C, in particular of 110 - 120°C, the epoxy resin composition is left at the abovementioned temperature for 10 s - 300 s, 20 s - 200 s, 30 s - 120 s, 30 s - 90 s, particularly preferably 30 s - 60 s.

11. Process according to either of Claims 9 and 10, in which, in the curing in stage d) of the epoxy resin composition at a temperature in the range from 100 to 220°C, preferably 140 - 220°C, in particular of 140 - 200°C, preferably between 160 and 190°C, the epoxy resin composition is left at the abovementioned temperature for 10 min - 6 h, 10 min - 2 h, 10 min - 60 min, 10 min - 30 min, particularly preferably 10 min - 25 min.

12. Process according to one of Claims 9 to 11, in which, between stage c) and d), the epoxy resin composition is brought to a temperature of 0 - 50°C, 10 - 40°C, in particular of 15 - 30°C, preferably for more than 5 min, more than 10 min, more than 20 min, more than 25 min, particularly preferably 30 - 60 min.

13. Adhesive-bonded article obtained from a process according to one of Claims 9 to 12.

14. Use of a heat-curing epoxy resin composition according to one of Claims 1 to 8 as heat-curing adhesive, in particular as heat-curing bodyshell adhesive in motor vehicle construction and/or for hem flange adhesive bonds.

15. Use of a composition as mentioned as second component **K2** in the heat-curing epoxy resin composition according to one of Claims 1 to 8, for the partial curing of a heat-curing epoxy resin composition comprising
- a first component **K1**, as mentioned in one of Claims 1 to 8, and
- at least one curing agent **B** for epoxy resins, which is activated through elevated temperature, as mentioned in one of Claims 1 to 8.

## Revendications

1. Composition de résines époxydes thermodurcissable, comprenant :
- un premier composant K1 contenant :
- au moins une résine époxyde A ayant en moyenne plus d'un groupe époxyde par molécule ;
- un second composant K2 contenant :
- au moins une amine tertiaire tAM de formule 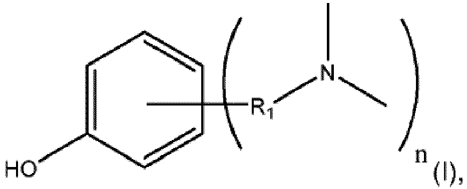 dans laquelle R₁ représente un groupe alkylène ayant 1 à 20 atomes de carbone, qui est éventuellement substitué et éventuellement comporte des hétéroatomes, et n représente une valeur de 1 à 3 ;
- au moins une amine primaire pAM choisie dans la liste consistant en la 1,3-xylylènediamine (MXDA), la 1,4-xylylènediamine (PXDA), le 1,3,5-tris(aminométhyl)benzène, en particulier la 1,3-xylylènediamine (MXDA),
la composition de résines époxydes thermodurcissable contenant en outre au moins un durcisseur B de résines époxydes, qui est activé par une température élevée,
dans laquelle le rapport en proportion de l'amine tertiaire tAM en grammes par mole de groupes époxydes de la résine époxyde A est de 2,4 à 19,6 g/mol de groupes époxydes, et dans laquelle le rapport en proportion de l'amine primaire pAM en grammes par mole de groupes époxydes de la résine époxyde A est de 6 à 31 g/mol de groupes époxydes.

2. Composition de résines époxydes thermodurcissable selon l'une des revendications précédentes, **caractérisée en ce que** le rapport en proportion de l'amine tertiaire tAM en grammes par mole de groupes époxydes de la résine époxyde A est de 2,4 à 13,7 g/mol, de 3,1 à 13,7 g/mol, de 3,1 à 11,8 g/mol, en particulier de 3,1 à 9,8 g/mol de groupes époxydes.

3. Composition de résines époxydes thermodurcissable selon l'une des revendications précédentes, **caractérisée en ce que** le rapport en proportion de l'amine tertiaire tAM en grammes par mole de groupes époxydes de la résine époxyde A est de 4,7 à 13,7 g/mol, en particulier de 5,9 à 9,8 g/mol de groupes époxydes.

4. Composition de résines époxydes thermodurcissable selon l'une des revendications précédentes, **caractérisée en ce que caractérisée en ce que** R₁ représente CH₂ ou -CH₂-NH-C₃H₆ et n = 1 à 3, en particulier 3.

5. Composition de résines époxydes thermodurcissable selon l'une des revendications précédentes, **caractérisée en ce que caractérisée en ce que** l'amine tertiaire tAM est choisie dans le groupe consistant en le 2-(diméthylaminométhyl)phénol, le 2,6-bis(diméthylaminométhyl)phénol, le 2,4-bis(diméthylaminométhyl)phénol, le 2,4,6-tris(diméthylaminométhyl)phénol et le 2,4,6-tris(((3-(diméthylamino)propyl)amino)méthyl)phénol, en particulier le 2,4,6-tris(((3-(diméthylamino)propyl)amino)méthyl)phénol et le 2,4,6-tris(diméthylaminométhyl)phénol, et tout spécialement le 2,4,6-tris(diméthylaminométhyl)phénol.

6. Composition de résines époxydes thermodurcissable selon l'une des revendications précédentes, **caractérisée en ce que** le rapport en proportion de l'amine primaire pAM en grammes par mole de groupes époxydes de la résine époxyde A est de 6 à 27 g/mol, de 6 à 24 g/mol, de 6 à 16 g/mol, de 6 à 14 g/mol, de 7 à 14 g/mol, en particulier de 7 à 12 g/mol de groupes époxydes.

7. Composition de résines époxydes thermodurcissable selon l'une des revendications précédentes, **caractérisée en ce que**, pour ce qui concerne le durcisseur B, il s'agit de dicyanodiamide,
dans laquelle en particulier le rapport en proportion du dicyanodiamide B en grammes par mole de groupes époxydes de la résine époxyde A est de 10 à 20 g/mol, en particulier de 12,5 à 17,5 g/mol de groupes époxydes.

8. Composition de résines époxydes thermodurcissable selon l'une des revendications précédentes, **caractérisée en ce que** la composition de résines époxydes thermodurcissable présente, immédiatement après le mélange, une viscosité à 25 °C de 500 à 4000 Pa.s.

9. Procédé de collage de substrats thermostables comprenant les étapes
a) application d'une composition de résines époxydes thermodurcissable selon l'une des revendications 1 à 8 sur la surface d'un substrat thermostable S1, en particulier un métal ;
b) mise en contact de la composition de résines époxydes thermodurcissable telle qu'appliquée avec la surface d'un autre substrat thermostable S2, en particulier un métal ;
c) chauffage de la composition de résines époxydes à une température de 90 à 130 °C, en particulier de 110 à 120 °C ;
d) durcissement de la composition de résines époxydes à une température dans la plage de 100 à 220 °C, de préférence de 140 à 220 °C, en particulier de 140 à 200 °C, de préférence entre 160 et 190 °C ;
dans lequel le substrat S2 est constitué d'un matériau identique à celui du substrat S1**,** ou d'un matériau différent.

10. Procédé selon la revendication 9, dans lequel, dans l'étape c), chauffage de la composition de résines époxydes à une température de 90 à 130 °C, en particulier de 110 à 120 °C, on abandonne au repos à la température mentionnée ci-dessus la composition de résines époxydes pendant 10 s à 300 s, 20 s à 200 s, 30 s à 120 s, 30 s à 90 s, d'une manière particulièrement préférée 30 s à 60 s.

11. Procédé selon l'une des revendications 9 ou 10, dans lequel, dans l'étape d), durcissement de la composition de résines époxydes à une température dans la plage de 100 à 220 °C, de préférence de 140 à 220 °C, en particulier de 140 à 200 °C, de préférence entre 160 et 190 °C, on abandonne au repos à la température mentionnée ci-dessus la composition de résines époxydes pendant 10 min à 6 h, 10 min à 2 h, 10 min à 60 min, 10 min à 30 min, d'une manière particulièrement préférée 10 min à 25 min.

12. Procédé selon l'une des revendications 9 à 11, dans lequel, entre les étapes c) et d), on porte la composition de résines époxydes à une température de 0 à 50 °C, de 10 à 40 °C, en particulier de 15 à 30 °C, de préférence pendant plus de 5 min, plus de 10 min, plus de 20 min, plus de 25 min, d'une manière particulièrement préférée 30 à 60 min.

13. Article collé obtenu par un procédé selon l'une des revendications 9 à 12.

14. Utilisation d'une composition de résines époxydes thermodurcissable selon l'une des revendications 1 à 8 comme adhésif thermodurcissable, en particulier comme adhésif thermodurcissable pour coque dans la construction automobile et/ou pour les collages de collets rabattus.

15. Utilisation d'une composition telle que mentionnée comme second composant K2 dans la composition de résines époxydes thermodurcissable selon l'une des revendications 1 à 8, pour le durcissement partiel d'une composition de résines époxydes thermodurcissable comprenant
- un premier composant K1, tel que mentionné dans l'une des revendications 1 à 8, et
- au moins un durcisseur B pour résines époxydes, qui est activé par une température élevée, tel que mentionné dans l'une des revendications 1 à 8.
